Europäisches Patentamt

European Patent Office

Office européen des brevets

(19)

(11) Publication number: **0 117 073**
**B1**

(12) **EUROPEAN PATENT SPECIFICATION**

(45) Date of publication of patent specification: **12.08.87**

(51) Int. Cl.⁴: **G 21 C 3/32**

(21) Application number: **84300443.3**

(22) Date of filing: **25.01.84**

(54) **Reducing vibrational damage to nuclear fuel rods.**

(30) Priority: **26.01.83 US 461276**
**25.04.83 US 487907**

(43) Date of publication of application:
**29.08.84 Bulletin 84/35**

(45) Publication of the grant of the patent:
**12.08.87 Bulletin 87/33**

(84) Designated Contracting States:
**BE CH DE FR GB LI SE**

(56) References cited:
**FR-A-2 379 744**
**FR-A-2 477 754**
**FR-A-2 517 868**
**US-A-4 110 160**

(73) Proprietor: **Siemens Aktiengesellschaft Berlin
und München**
**Wittelsbacherplatz 2**
**D-8000 München 2 (DE)**

(72) Inventor: **Busselman, Gary John**
**2729 VanGiesen**
**Richland Washington 99336 (US)**
Inventor: **Reparaz, Adolfo**
**8514 W. Falls Place**
**Kennewick Washington 99336 (US)**

Courier Press, Leamington Spa, England.

**Description**

This invention relates to reducing and/or eliminating fretting and/or vibrational damage of nuclear fuel rods.

Nuclear reactors of the pressurized water type make use of high velocity water flow in order to remove the heat from the fuel rods in the reactor core. The cooling water travels to the core through a variety of passages one of which is immediately adjacent to the edge of the reactor core. The material separating core coolant from the incoming coolant is stainless steel plate approximately 5.08 cm (2 inches) thick, and is known as the Baffle Plate. The pressure of the water outside the baffle may be 206.8 kPa (30 pounds per square inch) higher than that within the reactor core. Occasionally, there are gaps between the various plates which make up the core baffle. The differential water pressure between the outside of the baffle and the inside causes the water to flow rapidly through these gaps. This water flow is referred to as a "water jet" and since the reactor core is essentially full of fuel rods the water jet impinges on or very near a fuel rod. The usual water flow within a reactor core is bottom to top, parallel to the fuel rods. The baffle gap induced jet flow is perpendicular to the usual water flow. When the baffle jet strikes the fuel rod from the side it tends to induce a vibration into the fuel rod. This vibration tends to cause excessive wear on the fuel rods where they contact their normal support points which are called spacers. This type of wear is known as fretting and may proceed completely through the fuel rod cladding which results in escape of fission products from the nuclear fuel into the reactor cooling water. Fission products in the cooling water make normal reactor maintenance more difficult and much more expensive to the utility. Attempts at preventing or closing the baffle gaps have not been satisfactory. Some utilities have considered rerouting the cooling water prior to entering the core, so as to reduce the differential pressure which causes the jetting. This rerouting, however, is extremely expensive and requires a lengthy reactor shutdown.

Reference is directed to FR—A—2,379,744 which discloses a nuclear reactor core in which a plurality of fuel rods are subject to possible vibrational damage.

According to the invention from one aspect there is provided a fuel rod assembly for a nuclear reactor core, in which a plurality of fuel rods are subject to possible vibrational damage, characterised in that means are provided for securing together, in the fuel rod assembly, at least two of said fuel rods as a combined mass, whereby vibration amplitudes of said fuel rods are changed to reduce or eliminate damage to said fuel rods.

According to the invention from another aspect there is provided a method of eliminating or at least reducing vibrational damage of fuel rods in a fuel rod assembly disposed within a nuclear reactor core, characterised by securing together a plurality of fuel rods as a combined mass, whereby vibration amplitudes of said fuel rods are changed and damage to said fuel rods is reduced or eliminated.

A third aspect of the invention provides clip means for securing together a plurality of fuel rods in a fuel rod assembly subject to possible vibrational damage, said clip means acting to secure said fuel rods together as a combined mass, whereby vibration amplitudes of said fuel rods are changed to reduce the vibrational damage, and said clip means being associated with an inert rod to be disposed in said fuel rod assembly and securable by said inert rod against shifting generally in an axial direction with respect to said fuel rod assembly.

Some preferred embodiments of this invention feature a clip for securing together several nuclear fuel rods to lessen the tendency of the fuel rods to vibrate when struck by a cross jet of water. In securing several of the fuel rods together, the clip provides an increase in the mass of the rods subject to vibration, thus reducing the vibration amplitude of the rods. These clips are usually placed on the fuel assemblies only in select locations which are adjacent to known or potential baffle gaps.

In order to eliminate or reduce damage due to vibrational wear, known as fretting, a plurality of clips may be used to secure together at least two, and preferably four or five fuel rods. The rods are secured at various locations along the length or mid-portion of the fuel rod assembly. The clips are usually placed in the corner of the assembly, because this is usually the section of the assembly which receives the impinging water jet.

When the rods are secured together, their increased or combined mass will vibrate at much lower amplitudes thus eliminating the problem of fretting.

In one preferred arrangement an inert rod is placed or disposed amongst the clip secured fuel rods to secure each clip against axial movement along the fuel assembly.

The invention will be better understood from the following description, given, by way of example, with reference to the accompanying drawings, in which:—

Figure 1 is a schematic cross-section of a typical pressurised water reactor core illustrating the flow of water past the fuel rods of the core;

Figure 2 is a partial schematic plan or top view of the core of Figure 1, illustrating the problem of water jetting due to gaps or separations in the baffle joints of the baffle plates;

Figure 3 is a partial schematic perspective view of a fuel rod assembly disposed in the nuclear reactor, core of Figure 1, and depicting a preferred arrangement in accordance with this invention;

Figure 4 is an enlarged plan or top view of one of the clips of Figure 3, viewed along lines 4—4 showing the attachment of the clip about the fuel rods of the assembly;

Figure 5 is an enlarged cut-away perspective view of a section of the fuel rod assembly shown in Figure 3; and

Figure 6 is a cut-away perspective view of a portion of the section depicted in Figure 5.

Generally speaking, the embodiment to be described seeks to resolve the problem of resonance in fuel rods disposed in a pressurised water type nuclear reactor. The problem of resonance is caused by "water jetting". Gaps and/or separations may occur in the baffle joints to the core baffle plates. These gaps allow a jet of water to impinge upon adjacent fuel rods. Fuel rods have not been designed to withstand the transverse forces created by these water jets.

This problem is overcome by securing together the fuel rods adjacent to the gaps in order to change their vibrational amplitudes. Experiments have shown that severe fuel rod vibration can begin with as little as 13.79 kPa (two pounds per square inch) differential pressure acting through a baffle gap of 0.0762 cm (0.030 inches). By placing two of the clips at approximately 1/3 and 2/3 of the axial distance between the normal fuel rod spacers, noticeable fuel rod vibration does not occur until a differential pressure of 82.74 kPa (12 pounds per square inch) is reached acting through a gap of 0.0762 cm (0.030 inches). The actual number of clips required to correct a vibration condition will depend upon the number of rods tied together by each clip and the locations selected for placement about the fuel rod assembly.

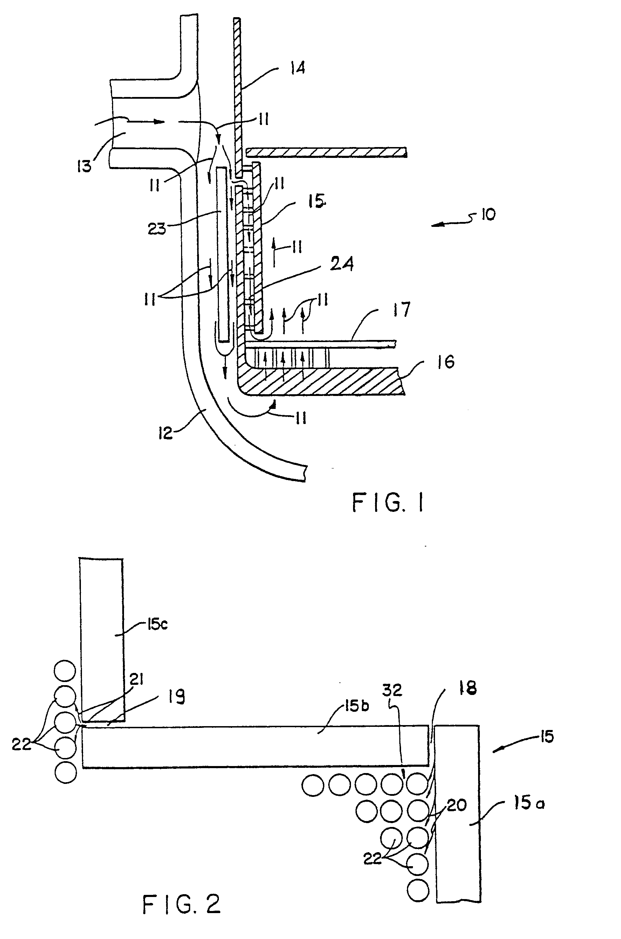

Now referring to Figure 1, a typical reactor core 10 is shown for a pressurized water type reactor 12. The flowing cooling water path to core 10 is depicted by arrows 11. The cooling water enters the inlet 13 and proceeds downwardly past the outside of the core barrel 14 and baffle plate 15. The water enters core 10 through support and lower core plates 16 and 17, respectively. The water flows past the fuel rods 22 (Figure 2) in a parallel direction from bottom to top. Normal operation of this reactor 12 does not contemplate any transverse or perpendicular water flow against the fuel rods. The fuel rods and fuel assemblies (not shown) are not, therefore, designed to withstand any differentials in pressure or forces generated in the transverse direction.

Referring to Figure 2, an impingement condition is shown for the reactor 12 of Figure 1. The baffle plate 15 is shown in top view, in three sections designated 15a, 15b, and 15c. Gaps can occur in the baffle joints 18 and 19, respectively, such that water jets can be created. The flow paths for the water jets are shown by respective arrows 20 and 21. These water jets 20 and 21, respectively impinge at transverse or perpendicular angles to the fuel rods 22, creating the aforementioned resonant condition.

The cross-flow 20 and 21 is a high velocity jetting because a pressure differential is established between the downward flow 11 between the barrel 14 and annulus 23 and former plates 24, and the upward flow 11 through the core 10 inside the barrel 14. The high velocity jetting 20 and 21 induces excessive rod motion producing severe wear and degradation to rods 22.

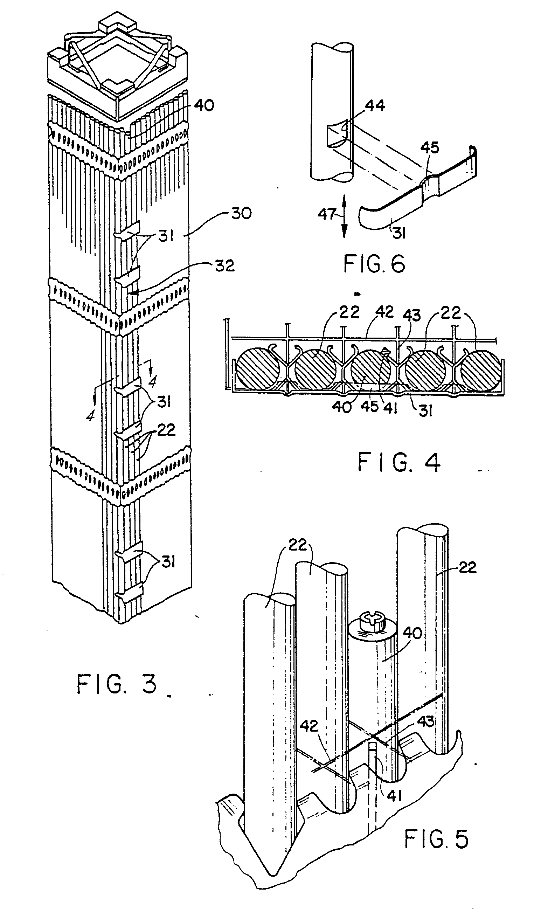

Referring to Figure 3 a typical fuel rod assembly 30, is depicted for core 10 of Figures 1 and 2. The fuel rods 22 of assembly 30 are shown braced together by a clip 31 at a corner section 32 thereof. This corner section is the corner section 32 shown in Figure 3. The clip 31 is designed to secure together four or five fuel rods 22 as shown in greater detail in Figure 4. The clips 31 affect the vibration amplitude of the fuel rods 22 by changing their overall mass. Thus, the secured rods 22 act as a combined mass, which causes the vibrational amplitude of the rods to decrease. This vibrational change prevents the severe resonant condition which causes wear and fretting of the rods.

The rods 22 of the center gap 19 can similarly be secured to prevent or reduce severe vibrations.

The clips 31 are placed along the length or mid-portion of the assembly 30 as shown. The number of clips and their location about the assembly 30 depends upon the severity of the pressure differential, the number of rods 22 which are secured by clip 31, and the length of the assembly 30.

Generally speaking, it has been found that between 10 and 25 clips are needed for each assembly experiencing the water jet induced vibration.

The clips 31 are generally secured to the rods 22 and assembly 30 prior to installing the fuel rods or assemblies into the core.

The clips 31 can be made of inconel or stainless steel.

In order to prevent any of the clips 31 from shifting, generally in an axial direction about said assembly 30, an inert rod 40 is placed amongst secured fuel rods 22 in the assembly 30, as shown in Figures 3, 4 and 5. Referring to Figures 5 and 6, the inert rod 40 has a tab 41 welded along its length, which tab 41 abuts against assembly spacers 42 and 43. This tab 41 prevents rotation of rod 40 within the fuel rod bundle, and maintains notches 44 (typical) in contact with a dimple abutment 45 (typical) of each clip 31. Contact of abutment 45 of each clip 31 with their respective notches 44 prevents slippage or movement (arrows 47) of the clips 31 with respect to the fuel rod assembly 30, due to relaxation of the spring force of the clips from irradiation, and/or due to the flow induced vibrations.

## Claims

1. A fuel rod assembly for a nuclear reactor core, in which a plurality of fuel rods are subject to possible vibrational damage, characterised in that means are provided for securing together, in the fuel rod assembly, at least two of said fuel rods as a combined mass, whereby vibration amplitudes of said fuel rods are changed to reduce or eliminate damage to said fuel rods.

2. A fuel rod assembly according to claim 1, wherein at least four of said fuel rods are secured together by said securing means.

3. A fuel rod assembly according to claim 1, wherein at least five of said fuel rods are secured together by said securing means.

4. A fuel rod assembly according to claim 1, 2, or 3, wherein the securing means comprise a plurality of clips.

5. A fuel rod assembly according to claim 4, wherein the clips of said plurality of clips are arranged about a corner section of said fuel rod assembly.

6. A fuel rod assembly according to any preceding claim, wherein the clips of said plurality of clips are arranged about a mid-portion along the length of said fuel rod assembly.

7. A fuel rod assembly according to claim 4, claim 5, or claim 6 as appendant to claim 4, further including at least one inert rod disposed within said fuel rod assembly to securing at least one of said clips against axial movement relative to said fuel rod assembly.

8. A method of eliminating or at least reducing vibrational damage of fuel rods in a fuel rod assembly disposed within a nuclear reactor core, characterised by securing together a plurality of fuel rods as a combined mass, whereby vibration amplitudes of said fuel rods are changed and damage to said fuel rods is reduced or eliminated.

9. Clip means for securing together a plurality of fuel rods in a fuel rod assembly subject to possible vibrational damage, said clip means acting to secure said fuel rods together as a combined mass, whereby vibration amplitudes of said fuel rods are changed to reduce the vibrational damage, and said clip means being associated with an inert rod to be disposed in said fuel rod assembly and securable by said inert rod against shifting generally in an axial direction with respect to said fuel rod assembly.

**Patentansprüche**

1. Brennstabbündel für den Kern eines Kernreaktors, in dem mehrere Brennstäbe durch Schwingungen beschädigt werden können, dadurch gekennzeichnet, daß im Brennstabbündel Mittel zum Zusammenhalten von wenigstens zwei Brennstäben zu einem Massenverbund vorgesehen sind, wodurch die Schwingungsamplituden dieser Brennstäbe verändert und die Beschädigung dieser Brennstäbe vermindert oder vermieden wird.

2. Brennstabbündel nach Anspruch 1, dadurch gekennzeichnet, daß wenigstens vier der Brennstäbe durch das Mittel zusammengehalten sind.

3. Brennstabbündel nach Anspruch 1, dadurch gekennzeichnet, daß wenigstens fünf Brennstäbe durch das Mittel zusammengehalten sind.

4. Brennstabbündel nach Anspruch 1, 2 oder 3, dadurch gekennzeichnet, daß das Mittel mehrere Klammern aufweist.

5. Brennstabbündel nach Anspruch 4, dadurch gekennzeichnet, daß die Klammern in einem Eckbereich des Brennstabbündels angeordnet sind.

6. Brennstabbündel nach einem der vorangehenden Ansprüche, dadurch gekennzeichnet, daß die Klammern in Bezug auf die Länge des Brennstabbündels in einem Mittelbereich angeordnet sind.

7. Brennstabbündel nach Anspruch 4, Anspruch 5 oder Anspruch 6 soweit auf Anspruch 4 rückbezogen, dadurch gekennzeichnet, daß innerhalb des Brennstabbündels wenigstens ein inaktiver Stab vorgesehen ist, der wenigstens eine der Klammern gegen Axialbewegung relativ zum Brennstabbündel sichert.

8. Verfahren zur Vermeiden oder wenigstens Verringern der Beschädigung von Brennstäben eines im Kern eines Kernreaktors angeordneten Brennstäbbündels durch Schwingungen, dadurch gekennzeichnet, daß mehrere Brennstäbe als Massenverbund zusammengehalten werden, wodurch die Schwingungsamplituden dieser Brennstäbe geändert und eine Beschädigung dieser Brennstäbe vermindert oder vermieden wird.

9. Klammermittel zum Zusammenhalten mehrerer durch Schwingungen beschädigbarer Brennstäbe in einem Brennstabbündel welches diese Brennstäbe als Massenverbund zusammenhält, wodurch Schwingungsamplituden dieser Brennstäbe geändert werden, um die Beschädigung durch Schwingungen zu vermindern, und welches mit einem in dem Brennstäbbündel angeordneten inaktiven Stab verbunden ist und durch diesen inaktiven Stab gegen Verschieben in Axialrichtung in Bezug auf das Brennstabbündel gesichert ist.

**Revendications**

1. Un assemblage de crayons combustibles pour un coeur de réacteur nucléaire, dans lequel un ensemble de crayons combustibles sont susceptibles d'être endommagés par des vibrations, caractérisé en ce qu'il existe des moyens destinés à fixer ensemble, dans l'assemblage de crayons combustibles, deux au moins des crayons combustibles sous la forme d'une masse combinée, grâce à quoi les amplitudes de vibration des crayons combustibles sont changées de façon à réduire ou à éliminer l'endommagement des crayons combustibles.

2. Un assemblage de crayons combustibles selon la revendication 1, dans lequel quatre au moins des crayons combustibles, sont fixés ensemble par les moyens de fixation.

3. Un assemblage de crayons combustibles selon la revendication 1, dans lequel cinq au moins des crayons combustibles sont fixés ensemble par les moyens de fixation.

4. Un assemblage de crayons combustibles selon la revendication 1, 2 ou 3, dans lequel les moyens de fixation comprennent un ensemble d'attaches.

5. Un assemblage de crayons combustibles selon la revendication 4, dans lequel les attaches de l'ensemble d'attaches sont disposées dans une région de coin de l'assemblage de crayons combustibles.

6. Un assemblage de crayons combustible selon l'une quelconque des revendications précédentes, dans lequel les attaches de l'ensemble d'attaches sont disposées dans une région médiane sur la longueur de l'assemblage de crayons combustibles.

7. Un assemblage de crayons combustibles selon la revendication 3, la revendication 4 ou la revendication 6 rattachée à la revendication 4, comprenant en outre au moins un crayon inerte disposé à l'intérieur de l'assemblage de crayons combustibles, pour fixer l'une au moins des attaches de façon à empêcher un mouvement axial de celle-ci par rapport à l'assemblage de crayons combustibles.

8. Un procédé pour éliminer ou tout au moins pour réduire l'endommagement par vibration de crayons combustibles dans un assemblage de crayons combustibles disposé à l'intérieur d'un coeur de réacteur nucléaire, caractérisé en ce qu'on fixe ensemble plusieurs crayons combustibles, sous la forme d'une masse combinée, grâce à quoi les amplitudes de vibration de ces crayons combustibles sont changées, et l'endommagement des crayons combustibles est réduit ou éliminé.

9. Structure d'attache destinée à fixer ensemble plusieurs crayons combustibles dans un assemblage de crayons combustibles susceptible d'être endommagé par des vibrations, cette structure d'attache ayant pour action de fixer ensemble les crayons combustibles sous la forme d'une masse combinée, grâce à quoi les amplitudes de vibration des crayons combustibles sont changées de façon à réduire l'endommagement par vibration, et la structure d'attache étant associé avec un crayon inerte prévu pour être placé dans l'assemblage de crayons combustibles, et pouvant être fixée par le crayon inerte pour éviter qu'elle se déplace dans une direction générale axiale par rapport à l'assemblage de crayons combustibles.

FIG. 1

FIG. 2

1

FIG. 6

FIG. 4

FIG. 3

FIG. 5